# EUROPÄISCHE PATENTSCHRIFT

(11) **EP 3 468 775 B1**
(45) Veröffentlichungstag und Bekanntmachung des Hinweises auf die Patenterteilung: **01.07.2020**
(21) Anmeldenummer: 17727190.5
(22) Anmeldetag: 29.05.2017
(51) Int. Cl.: B29C 64/153, B22F 3/105, B29C 64/393, B33Y 50/02

(54) **VERFAHREN UND VORRICHTUNG ZUM HERSTELLEN DREIDIMENSIONALER OBJEKTE DURCH SELEKTIVES VERFESTIGEN EINES SCHICHTWEISE AUFGEBRACHTEN AUFBAUMATERIALS**
METHOD AND DEVICE FOR PRODUCING THREE-DIMENSIONAL OBJECTS BY SELECTIVELY SOLIDIFYING A BUILDING MATERIAL APPLIED LAYER BY LAYER
PROCÉDÉ ET DISPOSITIF POUR LA FABRICATION D'OBJETS 3D PAR SOLIDIFICATION SÉLECTIVE D'UN MATÉRIAU DE CONSTRUCTION APPLIQUÉ EN COUCHES

(30) Priorität: 08.06.2016 DE 102016110593
(43) Veröffentlichungstag der Anmeldung: 17.04.2019
(73) Patentinhaber: TRUMPF Laser- und Systemtechnik GmbH, 71254 Ditzingen (DE)
(72) Erfinder: WÜST, Frank Peter, 71083 Herrenberg (DE); GRUBER, Julian, 70825 Korntal (DE); THIELMANN, Michael, 71665 Vaihingen an der Enz (DE); BUCHBINDER, Damien, 12487 Berlin (DE); WAGNER, Joachim, 70176 Stuttgart (DE)
(74) Vertreter: Mammel und Maser
(86) Internationale Anmeldenummer: PCT/EP2017/062927
(87) Internationale Veröffentlichungsnummer: WO 2017/211610

(56) Entgegenhaltungen:
- EP-A1- 1 396 556
- EP-A2- 0 856 393
- WO-A1-2014/199149

## Beschreibung

Die Erfindung betrifft ein Verfahren sowie eine Vorrichtung zur Herstellung dreidimensionaler Objekte durch selektives Verfestigen eines schichtweise aufgebrachten Aufbaumaterials, bei welchem ein auf das aufgebrachte Aufbaumaterial einwirkender Strahl eine verfestigte Schicht auf einer Aufbauplattform erzeugt.

Aus der DE 10 2013 021 891 A1 ist eine Vorrichtung mit beschleunigter Verfahrensführung für ein 3D-Druckverfahren bekannt, welche mehrere Druckköpfe umfasst, die zum selektiven Verfestigen eines schichtweise aufgebrauchten Aufbaumaterials in einer XY-Ebene verfahren werden, um ein dreidimensionales Objekt zu erzeugen. Zur Erhöhung der Volumenleistung ist ein Parallelisieren der Vorgänge von Beschichten und Bedrucken vorgesehen. Diese Vorgänge werden gleichzeitig ausgeführt, indem mehrere Beschichtungs- und Druckeinheiten hintereinander angeordnet sind, sodass in einer gemeinsamen Überfahrt der Beschichtungs- und Druckeinheiten mehrere Schichten abgelegt und selektiv verfestigt werden.

Aus der US 2015/0273583 A1 ist eine Laserabtast-Inspektionseinrichtung bekannt, welche mehrere nebeneinander angeordnete berührungslose Sensoren aufweist, die gemeinsam entlang einer Führungsanordnung entlang einer Aufbaukammer für ein schichtweise aufzubauendes Werkstück verfahrbar sind. Diese Einrichtung umfasst des Weiteren einen Abstreifer und einen Positionssensor. Diese Laserabtast-Inspektionseinrichtung wird mit dem Abstreifer verfahren, um die aufzubringenden Fläche zu nivellieren und zu erfassen. Darauffolgend wird der Laserstrahl mittels eines Spiegels auf die zu verfestigende Schicht umgelenkt. Nach dem Aufbau der verfestigten Schicht mittels eines Lasers wird die Laserabtast-Inspektionseinrichtung erneut verfahren.

Aus der DE 10 2013 109 162 A1 sind ein Verfahren und eine Vorrichtung zum Herstellen dreidimensionaler Objekte durch selektives Verfestigen eines schichtweise aufgebrachten Aufbaumaterials bekannt. Dabei ist vorgesehen, dass oberhalb einer Aufbauplattform, welche sich in einer XY-Ebene erstreckt, ein Heizmodul vorgesehen ist, welches mehrere Funktionsöffnungen umfasst. Oberhalb des Heizmoduls ist eine Strahlungsquelle vorgesehen, durch welche ein Laserstrahl auf die Aufbauplattform gerichtet ist. Neben der Strahlungsquelle ist ein Heizmodul und daneben eine Aufbringungseinrichtung für das Aufbaumaterial vorgesehen. Dazu wiederum benachbart ist ein Infrarotstrahler vorgesehen, um das Aufbaumaterial beziehungsweise die erzeugte Schicht aufzuwärmen.

Zum Aufbringen einer Schicht ist vorgesehen, dass mittels eines IR-Strahls die Aufbauplattform oder die zuletzt aufgebrachte Schicht erwärmt wird. Anschließend wird während einer Verfahrbewegung der Aufbauplattform relativ zum Heizmodul ein Aufbaumaterial aufgebracht. Darauffolgend wird dieses aufgebrachte Aufbaumaterial mittels des Laserstrahls verfestigt.

Eine zweite Schicht wird durch eine entgegengesetzte Verfahrrichtung der Aufbauplattform erzeugt, und es wird ein analoger Ablauf wie beim Verfestigen der ersten Schicht durchgeführt.

Aus der WO2012/076205 A1 ist ein Verfahren zur Herstellung dreidimensionaler Bauteile bekannt, wobei auf einem Endlosband mehrere Schichten zur Herstellung von mehreren dreidimensionalen Objekten aufgebaut werden können, wobei entlang des Endlosbandes mehrere Einzelbeschichtungsvorrichtungen oder dazugehörige Strahlquellen zum Aufbringen eines Laserstrahls vorgesehen sind, so dass parallel beschichtet und belichtet beziehungsweise das Aufbaumaterial verfestigt wird.

Aus der WO2014/199149 A1 ist eine Vorrichtung zur Herstellung von dreidimensionalen Objekten durch Verfestigen eines schichtweise aufgebrachten Aufbaumaterials in einer Prozesskammer auf einer Aufbauplattform bekannt. Dabei wird über mehrere optische Elemente jeweils ein Laserstrahl auf einen Arbeitsbereich der Aufbauplattform aufgebracht. Dem Laserstrahl vorauseilend und nacheilend ist jeweils ein Strömungskanal positioniert, um eine Schutzgasströmung zu erzeugen. Dies ist entgegengesetzt zur Verfahrrichtung des Laserstrahls vorgesehen. An dieser Schutzgasströmungsvorrichtung ist vorauseilend und nacheilend jeweils noch ein Schieber zur Glättung des Aufbaumaterials vorgesehen. Benachbart und außerhalb der Aufbauplattform ist ein Speicher zur Ausgabe von neu aufzubringendem Aufbaumaterial angeordnet.

Der Erfindung liegt die Aufgabe zugrunde, eine Vorrichtung zur Herstellung von dreidimensionalen Objekten durch selektives Verfestigen eines schichtweise aufgebrachten Aufbaumaterials sowie ein Verfahren zur Herstellung solcher dreidimensionaler Objekte vorzuschlagen, um die Prozesszeit, insbesondere Nebenzeit, zu reduzieren und die Produktivität bei gleichzeitiger Überwachung der Qualität der aufzubringende Schicht zu steigern.

Diese Aufgabe wird durch eine Vorrichtung zum Herstellen von dreidimensionalen Objekten durch selektives Verfestigen eines schichtweise aufgebrachten Aufbaumaterials gelöst, welche eine Prozessunterstützungsvorrichtung mit einem ersten und zweiten Modul mit einem dazwischen liegenden Strahlführungsabschnitt für den auf die Aufbauplattform gerichteten Strahl aufweist und das erste und zweite Modul jeweils eine Auftragseinrichtung zur Ausgabe von Aufbaumaterial und eine Überwachungseinrichtung mit zumindest einem Sensor zum Erfassen der aufgebrachten und der verfestigten Schicht aufweist. Das erste und zweite Modul sind somit redundant aufgebaut. Dadurch wird ermöglicht, dass bei einer Verfahrbewegung in eine erste Verfahrrichtung des Strahls das erste Modul dem Strahl vorauseilend und das zweite Modul dem Strahl nacheilend verfahren wird und in entgegengesetzter Verfahrrichtung des Strahls das zweite Modul vorauseilend und das erste Modul nacheilend geführt ist. Dies ermöglicht, dass durch die Mitführung der Überwachungseinrichtung mit zumindest einem Sensorelement während des Festigungsprozesses durch den Strahl die Schicht des aufgebrachten und noch nicht verfestigten als auch die Schicht des verfestigten Aufbaumaterials unmittelbar erfasst werden kann, wodurch die Qualität überwacht und die Nebenzeit reduziert oder bis auf Null gesetzt werden kann.

Bevorzugt ist vorgesehen, dass das erste Modul und das zweite Modul und dazwischenliegend der Strahlführungsabschnitt entlang einer gemeinsamen Achse aneinandergereiht angeordnet sind und die zumindest eine in dem jeweiligen Modul vorgesehene Auftragsvorrichtung und Überwachungseinrichtung spiegelsymmetrisch zum Strahlführungsabschnitt angeordnet sind. Dadurch ist ein beidseitiges Verfahren der Prozessunterstützungsvorrichtung möglich, und in jede Verfahrrichtung ist dieselbe Funktionalität gegeben.

Des Weiteren ist bevorzugt vorgesehen, dass die Überwachungseinrichtung unmittelbar benachbart zum Strahlführungsabschnitt und die Auftragsvorrichtung entfernt zum Strahlführungsabschnitt in dem jeweiligen Modul vorgesehen sind. Dies weist den Vorteil auf, dass unmittelbar benachbart zum Auftreffpunkt des Strahls auf dem Aufbaumaterial die Prozessparameter erfasst werden können. Das zumindest eine vorauseilende Sensorelement kann die Vollständigkeit und/oder die erforderliche Dicke der aufgebrachten Schicht des Aufbaumaterials erfassen, und das zumindest eine Sensorelement in der nacheilenden Überwachungsein-richtung kann Analoges für das verfestigte Aufbaumaterial erfassen.

Die Auftragseinrichtung des ersten und zweiten Moduls umfasst einen Speicher für das Aufbaumaterial sowie eine Auftragsdüse zum dosierten Ausgeben des Auftragsmaterials. Dadurch kann eine gezielte Ausgabe des Aufbaumaterials erfolgen.

Die Überwachungseinrichtung des ersten und zweiten Moduls weist benachbart zum zumindest einen Sensorelement eine Belichtungseinrichtung auf. Beispielsweise kann eine Thermokamera eingesetzt werden, um eine Abkühlrate benachbart zum Aufschmelzpunkt des Aufbaumaterials zu erfassen. Als Belichtungseinrichtung kann ein IR-Strahler, ein oder eine Gruppe von Dioden-Laser oder auch ein Weißlicht, eingesetzt werden.

In dem ersten und zweiten Modul der Prozessunterstützungsvorrichtung ist zwischen der Auftragsvorrichtung und der Überwachungseinrichtung jeweils ein Strömungskanal einer Schutzgasströmungsvorrichtung vorgesehen, die jeweils auf den Strahlführungsabschnitt ausgerichtet sind und sich vorzugsweise quer zur Verfahrrichtung der Prozessunterstützungsvorrichtung erstrecken. Dadurch kann das Aufschmelzen des Aufbaumaterials und Verfestigen zu einer Schicht verbessert werden, da durch das Zuführen eines Schutzgases in die Prozesszone und ein sich unmittelbar daran anschließendes Absaugen aus der Prozesszone Schmauch, Rauch, Spritzer oder dergleichen umgehend abgeführt werden.

Bevorzugt ist vorgesehen, dass der Strömungskanal als Absaugung und als Düse ausgebildet ist, so dass die Strömungsrichtung des Schutzgases in Abhängigkeit der Verfahrrichtung der Prozessunterstützungsvorrichtung ansteuerbar ist. Dadurch können wieder unabhängig der Verfahrrichtung der Prozessunterstützungsvorrichtung gleiche Prozessbedingungen geschaffen sein.

Des Weiteren ist bevorzugt vorgesehen, dass an jedem Modul zwischen der Auftragsvorrichtung und der Überwachungseinrichtung eine Nivelliereinrichtung vorgesehen ist, welche vorzugsweise als Bürstenleiste, als Gummilippe oder als Klinge ausgebildet ist. Dies ermöglicht, dass nach dem Auftragen von Aufbaumaterial aus der Aufbauvorrichtung eine Glättung des Aufbaumaterials für das nachfolgende Verfestigen des Aufbaumaterials vorgesehen ist.

Die Nivelliereinrichtung und/oder der Strömungskanal und/oder die Auftragsdüse der Auftragsvorrichtung, die quer zur Verfahrrichtung der Prozessunterstützungsvorrichtung ausgerichtet sind, erstrecken sich bevorzugt über die gesamte Breite der Aufbauplattform. Dadurch wird ermöglicht, dass ein quasi geschlossener Prozessraum um den Strahlführungsabschnitt geschaffen wird, wodurch wiederum verbesserte Prozessbedingungen geschaffen sind. Zudem kann über die gesamte Breite der Aufbauplattform das Aufbaumaterial aufgebracht werden.

Die der Erfindung zugrunde liegende Aufgabe wird des Weiteren durch ein Verfahren zur Herstellung dreidimensionaler Objekte durch selektives Verfestigen eines schichtweise aufgebrachten Aufbaumaterials gelöst, bei welchem gleichzeitig mit der Auslenkung von zumindest einem Strahl auf ein Aufbaumaterial in eine Verfahrrichtung zum Verfestigen des Aufbaumaterials eine Prozessunterstützungsvorrichtung mit einem ersten und zweiten Modul und einem dazwischen liegenden Strahlführungsabschnitt verfahren wird und jedes Modul eine Auftragsvorrichtung zur Ausgabe von Aufbaumaterial und eine Überwachungseinrichtung mit zumindest einem Sensorelement zum Erfassen der aufgebrachten und verfestigten Schicht aufweist, und bei einer Verfahrbewegung in eine erste Verfahrrichtung des zumindest einen Strahles das erste Modul dem zumindest einen Strahl vorauseilend und das zweite Modul dem zumindest einen Strahl nacheilend sowie in entgegengesetzter Verfahrrichtung des zumindest einen Strahls das zweite Modul vorauseilend und das erste Modul nacheilend geführt wird. Dadurch kann bei jeder Verfahrbewegung eine Schicht aufgebracht, verfestigt und überwacht werden, so dass zumindest ein paralleles Beschichten, Verfestigen und Überwachen ermöglicht wird.

Des Weiteren ist bevorzugt vorgesehen, dass die Überwachungseinrichtung des jeweiligen Moduls benachbart zum Strahlführungsabschnitt und die Auftragsvorrichtung des jeweiligen Moduls entfernt zum Strahlführungsabschnitt ausgerichtet wird und in einer ersten Verfahrrichtung der Prozessunterstützungsvorrichtung in dem vorauseilenden Modul die Auftragsvorrichtung zur Ausgabe von Aufbaumaterial angesteuert und die Überwachungseinrichtung des ersten Moduls mit zumindest einem Sensorelement die aufgetragene Schicht des Aufbaumaterials erfasst und überwacht wird und in dem nacheilenden Modul die Auftragsvorrichtung stillgesetzt wird und in dem Überwachungsmodul mit dem zumindest einen Sensorelement die Prozesszone im Auftreffpunkt des Strahls auf der Schicht des Aufbaumaterials und/oder ein verfestigter Bereich der Schicht erfasst und überwacht wird. Dadurch kann während einer Verfahrbewegung eine optimale Überwachung der Prozessparameter ermöglicht sein.

Des Weiteren ist bevorzugt vorgesehen, dass bei einem Richtungswechsel in der Verfahrrichtung des Strahls zum Verfestigen des Aufbaumaterials die Ansteuerung des ersten und zweiten Moduls vertauscht wird. Durch die Redundanz des ersten und zweiten Moduls ist dadurch eine einfache Ansteuerung gegeben.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht einer erfindungsgemäßen Vorrichtung,
Figur 2 eine schematische Ansicht von oben auf eine Aufbauplattform in der Prozesskammer der Vorrichtung gemäß Figur 1,
Figur 3 eine schematische Ansicht von oben auf eine Prozessunterstützungsvorrichtung der Vorrichtung gemäß Figur 1,
Figur4 eine schematische Seitenansicht der Prozesskammer während eines Prozessschrittes zum Verfestigen einer ersten Schicht, und
Figur 5 eine schematische Seitenansicht der Prozesskammer in einem weiteren Prozessschritt zum Verfestigen einer zweiten Schicht auf der ersten Schicht.

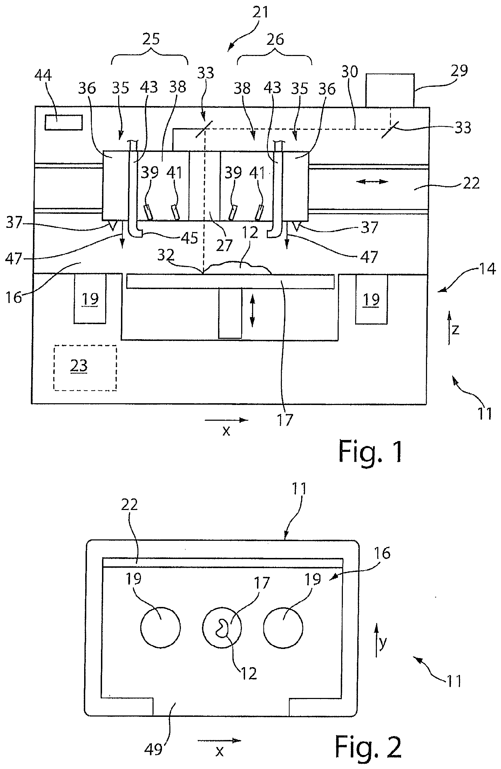

In Figur 1 ist eine schematische Seitenansicht einer erfindungsgemäßen Vorrichtung 11 zum Herstellen von dreidimensionalen Objekten 12 durch selektives Verfestigen eines schichtweise aufgebrachten Aufbaumaterials dargestellt. Diese Vorrichtungen 11 werden auch als 3D-Drucksysteme, selektive Lasersintermaschinen, selektive Laserschmelzmaschinen oder dergleichen bezeichnet. Die Vorrichtung 11 umfasst ein Gehäuse 14, in der eine Prozesskammer 16 vorgesehen ist, wobei die Prozesskammer 16 nach außen hin geschlossen und über eine Tür 49 (Figur 2) oder einen Sicherheitsverschluss zugänglich ist. In der Prozesskammer 16 ist in einer XY-Ebene eine Aufbauplattform 17 vorgesehen, auf der ein dreidimensionales Objekt 12 schichtweise erzeugt wird. Benachbart zur Aufbauplattform 17, welche in Z-Richtung verfahrbar ist, sind Überlaufbehälter 19 oder Auffangbehälter vorgesehen, in welchen nicht benötigtes oder nicht verfestigtes Aufbaumaterial gesammelt wird. Oberhalb der Aufbauplattform 17 ist in der Prozesskammer 16 eine Prozessunterstützungsvorrichtung 21 angeordnet. Diese Prozessunterstützungsvorrichtung 21 ist zumindest in X-Richtung entlang einer Führung 22 durch eine Steuerung 23 der Vorrichtung 11 angesteuert.

Die Prozessunterstützungsvorrichtung 21 umfasst ein erstes und zweites Modul 25, 26, zwischen denen ein Strahlführungsabschnitt 27 angeordnet ist. Dieses erste Modul 25, das zweite Modul 26 und der Strahlführungsabschnitt 27 sind gemeinsam als eine Einheit oberhalb der Aufbauplattform 17 verfahrbar.

Der Strahlungsabschnitt 27 kann als Freiraum zwischen dem ersten und zweiten Modul 25, 26 ausgebildet sein, so dass ein von einer Strahlungsquelle 29 erzeugter Strahl 30 durch den Strahlführungsabschnitt 27 hindurch auf die Aufbauplattform 17 geführt und umgelenkt wird, um ein auf der Aufbauplattform 17 aufgebrachtes Aufbaumaterial im Auftreffpunkt 32 zu verfestigen. Die Strahlungsquelle 29 ist bevorzugt eine Laserstrahlquelle zur Erzeugung eines Laserstahls. Zwischen der Strahlungsquelle 29 und dem Auftreffpunkt 32 des Strahls 30 auf dem auf der Aufbauplattform 17 vorgesehenen Aufbaumaterial können mehrere Strahlführungselemente 33 vorgesehen sein, wobei eines der Strahlführungselemente 33 bevorzugt feststehend dem Strahlführungsabschnitt 27 zugeordnet ist.

Das erste Modul 25 und das zweite Modul 26 sind redundant aufgebaut, so dass nachfolgend der Aufbau des Moduls 25 beschrieben wird, der ebenfalls für das Modul 26 gilt.

Das Modul 25 umfasst eine Auftragsvorrichtung 35, welche einen Speicher 36 für das Aufbaumaterial sowie eine Auftragsdüse 37 aufweist. Des Weiteren umfasst das Modul 25 eine Überwachungseinrichtung 38, welche zumindest ein Sensorelement 39 aufweist. Dieses Sensorelement 39 kann beispielsweise die aufgetragene Schichtdicke und/oder die Vollständigkeit des Aufbaumaterials oder die verfestigte Schichtdicke als auch die Vollständigkeit der verfestigten Schicht erfassen. Ergänzend kann in der Überwachungseinrichtung eine Belichtungseinrichtung 41 vorgesehen sein, die auf die Prozesszone beziehungsweise das Schmelzbad gerichtet ist oder auf einen benachbarten Bereich dazu, um davon Prozessparameter zu erfassen. Die Belichtungseinrichtung 41 kann ein IR-Strahler oder dergleichen sein. Das zumindest eine Sensorelement 39 und/oder die zumindest eine Belichtungseinrichtung 41 sind in Richtung auf den Auftreffpunkt 32 oder benachbart dazu ausgerichtet.

Zwischen der Auftragsvorrichtung 35 und der Überwachungseinrichtung 38 ist ein Strömungskanal 42 einer nur schematisch dargestellten Schutzgasströmungsrichtung 44 angeordnet. Dieser Strömungskanal 43 weist eine auf den Strahlführungsabschnitt 27 gerichtete Düse 45 auf. Zwischen dem Strömungskanal 43 und der Auftragsvorrichtung 35 ist eine Nivelliereinrichtung 47 vorgesehen. Diese kann als eine Bürste, eine Klinge oder dergleichen ausgebildet sein. Die Aneinanderreihung der Überwachungseinrichtung 38, des Strömungskanals 43, der Nivelliereinrichtung 47 und der Auftragsvorrichtung 35 ist im ersten und zweiten Modul 25, 26 spiegelbildlich zum Strahlführungsabschnitt 27 vorgesehen.

Die Steuerung 23 umfasst zumindest eine Datenverarbeitungsvorrichtung und ist für die Ansteuerung aller Komponenten der Vorrichtung 11 vorgesehen.

In Figur 2 ist schematisch eine Ansicht von oben auf die Aufbauplattform 17 sowie die Überlaufbehälter 19 dargestellt. Die Geometrie der Aufbauplattform kann von einer runden Form auch abweichen. An einer vorderen Stirnseite die Prozesskammer 16 ist schematisch die Öffnung 49 für die Zugänglichkeit in die Prozesskammer 16 dargestellt.

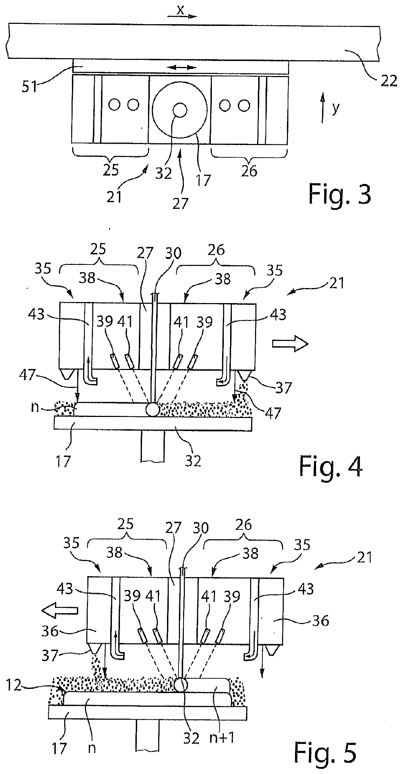

In Figur 3 ist eine schematische Ansicht von oben auf die Prozessunterstützungsvorrichtung 21 dargestellt. Entlang der Führung 22 ist das erste Modul 25 und das zweite Modul 26, die beispielsweise über eine gemeinsame Grundplatte 51 zueinander positioniert sind, verfahrbar an der Führung 22 aufgenommen. Die Breite der Düsen 45 des Strömungskanales 43 entspricht zumindest der sich in Y-Richtung erstreckenden Ausdehnung der Aufbauplattform 17. Analoges gilt vorteilhafterweise für die Nivelliereinrichtung 47. Gleiches gilt für die Auftragsdüse 37 der Auftragsvorrichtung 35. Dadurch kann während einer ersten Verfahrbewegung in X-Richtung und einer zweiten Verfahrbewegung entgegen der X-Richtung über die gesamte Breite der Aufbauplattform 17 ein Auftrag des Aufbaumaterials sowie eine Glättung des Aufbaumaterials erfolgen. Das Aufbaumaterial kann alternativ auch selektiv und/oder bereichsweise erfolgen, sofern die Auftragsdüse 37 dafür ausgebildet ist.

Des Weiteren weist die Erstreckung der Düsen 45 des Strömungskanals 43 über die Breite der Aufbauplattform 17 den Vorteil auf, dass im und um den Auftreffpunkt 32 des Strahls 30 auf das Aufbaumaterial eine Schutzgaszone erzeugt werden kann, welche zumindest der Prozesszone entspricht, so dass Schmauch, Rauch, Spritzer oder dergleichen unmittelbar von dem Schmelzbad im Auftreffpunkt 32 abtransportiert werden können.

Das zu verfestigende Aufbaumaterial ist bevorzugt pulverförmig. Als Aufbaumaterial kann ein metallisches Pulver als auch ein Kunststoffpulver eingesetzt werden.

In Figur 4 ist schematisch die Herstellung einer ersten Schicht n für ein dreidimensionales Objekt 12 dargestellt. Die Prozessunterstützungsvorrichtung 21 wird in eine erste Verfahrrichtung, beispielsweise in X-Richtung, verfahren. Dabei ist das zweite Modul 26 vorauseilend und das erste Modul 25 nacheilend zum Strahl 30. Über die Auftragsvorrichtung 35 des Moduls 26 wird Auftragsmaterial aufgebracht. Darauffolgend wird das aufgebrachte Auftragsmaterial durch die Nivelliereinrichtung 47 geglättet. Das zumindest eine Sensorelement 39 kann die aufgebrachte Schicht bezüglich der Schichtdicke und/oder der Vollständigkeit erfassen. Darauffolgend wird das noch nicht verfestigte Aufbaumaterial aufgrund des Auftreffen des Strahls 30 angeschmolzen und verfestigt. Die Überwachung des Schmelzbades kann durch die zumindest eine Belichtungseinrichtung 41 im ersten und/oder zweiten Modul 25, 26 erfolgen. Das zumindest eine Sensorelement 39 im nacheilenden ersten Modul 25 kann daraufhin die verfestigte Schicht bezüglich deren Dicke und/oder Vollständigkeit überwachen. Die nacheilende Nivelliereinrichtung 47 kann im Falle einer Klinge beispielsweise Überhöhungen an der erzeugten Schicht n glätten. Die Auftragsvorrichtung 35 des nacheilenden Moduls 25 ist bei dieser ersten Verfahrbewegung stillgesetzt. Die Schutzgasströmungsvorrichtung 33 ist während dieser ersten Verfahrbewegung angesteuert und erzeugt eine Strömung des Schutzgases, welche bevorzugt entgegengesetzt der Verfahrrichtung der Prozessunterstützungsvorrichtung 21 vorgesehen ist. Dadurch kann die erzeugte Wärme in der Prozesszone über die bereits verfestigte Schicht abgeführt werden, so dass eine thermische Beeinflussung des noch pulverförmigen Aufbaumaterials verringert oder verhindert ist.

Nach Herstellung der Schicht n wird die Verfahrrichtung der Prozessunterstützungsvorrichtung 21 umgekehrt, so dass diese entgegen der X-Richtung verfahren wird. Die Ansteuerung des ersten und zweiten Moduls 25, 26 wird vertauscht, so dass daraufhin die Schicht n+1 hergestellt wird. Dies ist beispielhaft in Figur 5 dargestellt. Die Funktion des zweiten Moduls 26 bei der Herstellung der Schicht n wird nunmehr vom ersten Modul 25 übernommen, welches vorauseilend ist. Beim Auftrag der Schicht n+1 ist das zweite Modul 26 nacheilend und wird entsprechen dem nacheilenden Modul 25 gemäß Figur 4 beim Aufbringen der Schicht n angesteuert.

Durch diese Prozessunterstützungsvorrichtung 21 ist eine vollständige Überwachung des Verfestigungsprozesses des Aufbaumaterials für jede Schicht n, n+1 ermöglicht. Gleichzeitig kann bei der Ansteuerung der Prozessunterstützungsvorrichtung 21 in jede der beiden Verfahrrichtungen jeweils ein vollständig überwachter Beschichtungsprozess zur Herstellung eines dreidimensionalen Objektes 12 erfolgen.

## Patentansprüche

1. Vorrichtung zum Herstellen von dreidimensionalen Objekten (12) durch selektives Verfestigen eines schichtweise aufgebrachten Aufbaumaterials mittels einer auf das Aufbaumaterial einwirkenden Strahles (30), mit zumindest einer Prozesskammer (16), welche zumindest eine in einer XY-Ebene angeordnete Aufbauplattform (17) aufweist, auf welcher das dreidimensionale Objekt (12) erzeugt wird, mit einer Strahlungsquelle (29) zur Erzeugung des Strahls (30) und zumindest einem Strahlführungselement (33) zum Führen und Ablenken des Strahls (30) auf das zu verfestigende Aufbaumaterial und mit einer Prozessunterstützungsvorrichtung (21), welche oberhalb der Aufbauplattform (17) zumindest in Richtung der XY-Ebene verfahrbar ist, **dadurch gekennzeichnet, dass** die Prozessunterstützungsvorrichtung (21) ein erstes und zweites Modul (25, 26) mit einem dazwischen liegend angeordneten Strahlführungsabschnitt (27) für den auf die Aufbauplattform (17) gerichteten Strahl (30) aufweist und jedes Modul (25, 26) zumindest eine Auftragseinrichtung (35) zur Ausgabe von Aufbaumaterial und eine Überwachungseinrichtung (38) mit zumindest einem Sensorelement (39) aufweist, wobei die Überwachungseinrichtung dazu angeordnet ist, die aufgebrachte und verfestigte Schicht des Aufbaumaterials zu erfassen.

2. Vorrichtung nach Anspruch 1, **dadurch gekennzeichnet, dass** das erste Modul (25) und das zweite Modul (26) und dazwischenliegend der Strahlführungsabschnitt (27) entlang einer Achse aneinandergereiht ausgerichtet sind und die zumindest in dem jeweiligen Modul (25, 26) vorgesehene Auftragsvorrichtung und Überwachungseinrichtung (38) spiegelsymmetrisch zum Strahlführungsabschnitt (27) angeordnet sind.

3. Vorrichtung nach Anspruch 1 oder 2, **dadurch gekennzeichnet, dass** die Überwachungseinrichtung (38) unmittelbar benachbart zum Strahlführungsabschnitt (27) und die Auftragsvorrichtungen (35) entfernt zum Strahlführungsabschnitt (27) an dem jeweiligen Modul (25, 26) vorgesehen sind.

4. Vorrichtung nach einem der vorhergehenden Ansprüche, **dadurch gekennzeichnet, dass** die Auftragseinrichtung (35) einen Speicher (36) für das Aufbaumaterial sowie eine Auftragsdüse (37) zum dosierten und/oder selektiven Ausgeben des Aufbaumaterials aufweist.

5. Vorrichtung nach einem der vorhergehenden Ansprüche, **dadurch gekennzeichnet, dass** die Überwachungseinrichtung (38) benachbart zum zumindest einen Sensorelement (39) zumindest eine Belichtungseinrichtung (41) aufweist.

6. Vorrichtung nach einem der vorhergehenden Ansprüche, **dadurch gekennzeichnet, dass** im ersten und zweiten Modul (25, 26) zwischen der Auftragsvorrichtung (35) und der Überwachungseinrichtung (38) jeweils ein Strömungskanal (43) einer Schutzgasströmungsvorrichtung (44) vorgesehen ist, die jeweils auf den Strahlführungsabschnitt (27) zugerichtete Strömungsdüsen (45) aufweist.

7. Vorrichtung nach Anspruch 6, **dadurch gekennzeichnet, dass** die Strömungskanäle (43) zum Absaugen und Ausströmen von Schutzgas ausgebildet sind, so dass die Strömungsrichtung des Schutzgases in Abhängigkeit der Verfahrrichtung der Prozessunterstützungsvorrichtung (21) ansteuerbar ist.

8. Vorrichtung nach einem der vorhergehenden Ansprüche, **dadurch gekennzeichnet, dass** jedes Modul (25, 26) zwischen der Auftragsvorrichtung (35) und der Überwachungseinrichtung (38), insbesondere zwischen der Auftragsvorrichtung (35) und dem Strömungskanal (43) eine Nivelliereinrichtung (47) aufweist, welche vorzugsweise als Bürstenelement, als Gummilippe oder als Klinge ausgebildet ist.

9. Vorrichtung nach einem der Ansprüche 4 bis 8, **dadurch gekennzeichnet, dass** die Strömungskanäle (43) und/oder die Nivelliereinrichtungen (47) und/oder die Auftragsdüsen (37) der Auftragsvorrichtung (35) rechtwinklig zur Verfahrrichtung ausgerichtet sind und sich vorzugsweise über die gesamte Breite der Aufbauplattform (17) erstrecken.

10. Vorrichtung nach einem der vorhergehenden Ansprüche, **dadurch gekennzeichnet, dass** die Strahlungsquelle (29) als Laserstrahlungsquelle zur Erzeugung eines Laserstrahls ausgebildet ist.

11. Verfahren zur Herstellung dreidimensionaler Objekte (12) durch selektives Verfestigen aus schichtweise aufgebrachten Aufbaumaterialien, bei dem in zumindest einer Prozesskammer (16) auf einer Aufbauplattform (17) das Aufbaumaterial aufgebracht wird, bei dem mit einer Strahlungsquelle (29) zumindest ein Strahl (30) erzeugt und mit zumindest einem Strahlführungselement (33) auf die aufgebrachte Schicht (n, n+1) des Aufbaumaterials gerichtet wird, bei dem mit dem zumindest einen auf die aufgebrachte Schicht (n, n+1) des Aufbaumaterials gerichteter Strahl (30) das Aufbaumaterial zu einer Schicht (n, n+1) verfestigt wird, **dadurch gekennzeichnet, dass** entlang einer Verfahrrichtung des auf das Aufbaumaterial zugeführten zumindest einen Strahls (30) gleichzeitig eine Prozessunterstützungsvorrichtung (21) mit einem ersten und zweiten Modul (25, 26) mit einem dazwischen liegenden Strahlführungsabschnitt (27) verfahren wird und jedes Modul (25, 26) eine Auftragsvorrichtung (35) zur Ausgabe von Aufbaumaterial und eine Überwachungseinrichtung (38) mit zumindest einem Sensorelement (39) aufweist, wobei die Überwachungseinrichtung dazu angeordnet ist, die aufgebrachte und verfestigte Schicht des Aufbaumaterials zu erfassen.

12. Verfahren nach Anspruch 11, **dadurch gekennzeichnet, dass** die Überwachungseinrichtung (38) des ersten und zweiten Moduls (25, 26) benachbart zum Strahlführungsabschnitt (27) und die Auftragsvorrichtung (35) entfernt zum Strahlführungsabschnitt (27) ausgerichtet wird und in einer ersten Verfahrrichtung der Prozessunterstützungsvorrichtung (21) in dem vorauseilenden Modul (25, 26) die Auftragsvorrichtung (35) zur Ausgabe des Aufbaumaterials angesteuert und mit dem zumindest einen Sensorelement (39) des Überwachungsmoduls (38) die aufgebrachte Schicht des Aufbaumaterials erfasst und überwacht wird und in dem nacheilenden Modul (26, 25) die Auftragsvorrichtung (30) abgeschalten wird und in dem Überwachungsmodul (38) mit dem zumindest einen Sensorelement (39) ein Schmelzbad im Auftreffpunkt (32) des Strahls (30) auf der Schicht und/oder ein verfestigter Bereich der Schicht des Aufbaumaterials benachbart zum Schmelzbad erfasst wird.

13. Verfahren nach Anspruch 11 oder 12, **dadurch gekennzeichnet, dass** bei einer Richtungsumkehr in der Verfahrrichtung der Prozessunterstützungsvorrichtung (21) die Ansteuerung des ersten und zweiten Moduls (25, 26) durch eine Steuerung (23) vertauscht wird.

14. Verfahren nach Anspruch 11 bis 13, **dadurch gekennzeichnet, dass** eine Strömungsrichtung eines Schutzgases der Schutzgasströmungsvorrichtung (44) zwischen den Strömungskanälen (43) des ersten und zweiten Moduls (25, 26) entgegengesetzt zur Verfahrrichtung der Prozessunterstützungseinrichtung (21) angesteuert wird.

15. Verfahren nach einem der Ansprüche 11 bis 14, **dadurch gekennzeichnet, dass** als Strahlungsquelle (29) eine Laserstrahlungsquelle eingesetzt wird und das schichtweise aufgebrachten Aufbaumaterials mit einem Laserstrahl selektiv verfestigt wird, und vorzugsweise das schichtweise aufgebrachte Aufbaumaterial durch Lasersintern oder Laserschmelzen selektiv verfestigt wird.

## Claims

1. Device for producing three-dimensional objects (12) by selectively solidifying a construction material applied in layers by means of a beam (30) acting on the construction material, having at least one process chamber (16), which has at least one construction platform (17) arranged in an XY-plane, on which construction platform (17) the three-dimensional object (12) is generated, having a radiation source (29) for generating the beam (30) and at least one beam guiding element (33) for guiding and deflecting the beam (30) onto the construction material to be solidified and having a process support device (21), which is displaceable above the construction platform (17) at least in the direction of the XY-plane, **characterised in that** the process support device (21) has a first and second module (25, 26) having a beam guiding section (27) arranged to be lying in between for the beam (30) directed onto the construction platform (17), and each module (25, 26) has at least one application device (35) for releasing construction material and a monitoring device (38) having at least one sensor element (39), wherein the monitoring device is arranged for detecting the applied and solidified layer of the construction material.

2. Device according to claim 1, **characterised in that** the first module (25) and the second module (26) and, in between, the beam guiding section (27) are aligned to be lined up one after the other along an axis, and the application device provided at least in the respective module (25, 26) and the monitoring device (38) are arranged mirror-symmetrically to the beam guiding section (27).

3. Device according to claim 1 or 2, **characterised in that** the monitoring device (38) is provided directly adjacent to the beam guiding section (27) and the application device (35) is provided on the respective module (25, 26) remotely from the beam guiding section (27).

4. Device according to one of the preceding claims, **characterised in that** the application device (35) has a store (36) for the construction material and an application nozzle (37) for the dosed and/or selective release of the construction material.

5. Device according to one of the preceding claims, **characterised in that** the monitoring device (38) has at least one exposure device (41) adjacent to the at least one sensor element (39).

6. Device according to one of the preceding claims, **characterised in that**, in the first and second module (25, 26), in each case a flow channel (43) of a protection gas flow device (44) is provided between the application device (35) and the monitoring device (38), said protection gas flow device (44) respectively having flow nozzles aimed at the beam guiding section (27).

7. Device according to claim 6, **characterised in that** the flow channels (43) are formed for suctioning and outflowing protective gas, such that the flow direction of the protective gas is driveable depending on the movement direction of the process support device (21).

8. Device according to one of the preceding claims, **characterised in that** each module (25, 26) has a levelling device (47) between the application device (35) and the monitoring device (38), in particular between the application device (35) and the flow channel (43), said levelling device (47) preferably being formed as a brush element, as a rubber lip or as a blade.

9. Device according to one of claims 4 to 8, **characterised in that** the flow channels (43) and/or the levelling devices (47) and/or the application nozzles (37) of the application device (35) are formed at a right angle to the displacement direction and preferably extend across the entire width of the construction platform (17).

10. Device according to one of the preceding claims, **characterised in that** the radiation source (29) is formed as a laser radiation source for generating a laser beam.

11. Method for producing three-dimensional objects (12) by selectively solidifying construction materials applied in layers, in which the construction material is applied in at least one process chamber (16) to a construction platform (17), in which at least one beam (30) is generated by a radiation source (29) and directed towards the applied layer (n, n+1) of the construction material with at least one beam guiding element (33), in which the construction material is solidified to a layer (n, n+1) by at least one beam (30) directed towards the applied layer (n, n+1) of the construction material, **characterised in that** a process support device (21) having a first and second module (25, 26) having a beam guiding section (27) lying in between is simultaneously moved along a movement direction of the at least one beam (30) supplied to the construction material, and each module (25, 26) comprises an application device (35) for releasing construction material and a monitoring device (38) having at least one sensor element (39), wherein the monitoring device is arranged for detecting the layer which has been applied and solidified.

12. Method according to claim 11, **characterised in that** the monitoring device (38) of the first and second module (25, 26) is aligned adjacently to the beam guiding section (27), and the application device (35) is aligned to be remote from the beam guiding section (27) and, in a first displacement direction of the process support device (21) in the leading module (25, 26), the application device (35) for releasing the construction material is driven, and the applied layer of the construction material is detected and monitored by the at least one sensor element (39) of the monitoring module (38), and the application device (30) is switched off in the lagging module (26, 25), and a melting bath is detected at the meeting point (32) of the beam (30) on the layer and/or a solidified region of the layer of the construction material adjacent to the melting bath is detected in the monitoring module (38) by the at least one sensor element (39).

13. Method according to claim 11 or 12, **characterised in that**, in the event of a change of direction in the displacement direction of the process support device (21), the driving of the first and second module (25, 26) is interchanged with a controller (23).

14. Method according to claim 11 to 13, **characterised in that** a flow direction of a protective gas of the protective gas flow device (44) between the flow channels (43) of the first and second module (25, 26) is driven in opposition to the displacement direction of the process support device (21).

15. Method according to one of claims 11 to 14, **characterised in that** a laser radiation source is used as the radiation source (29), and the construction material applied in layers is selectively solidified by a laser beam, and preferably the construction material applied in layers is selectively solidified by laser sintering or laser melting.

## Revendications

1. Dispositif destiné à fabriquer des objets tridimensionnels (12) par solidification sélective d'un matériau constitutif appliqué couche par couche au moyen d'un rayon (30) agissant sur ledit matériau constitutif, pourvu d'au moins une chambre de processus (16) qui présente au moins une plateforme de fabrication (17) disposée dans un plan XY sur laquelle est réalisé l'objet tridimensionnel (12), pourvu d'une source de rayonnement (29) destinée à générer le rayon (30) et d'au moins un élément de guidage de rayon (33) destiné à guider et à dévier ledit rayon (30) sur le matériau constitutif à solidifier, et pourvu d'un dispositif d'aide au processus (21) qui peut se déplacer au moins en direction du plan XY au-dessus de la plate-forme de fabrication (17), **caractérisé en ce que** le dispositif d'aide au processus (21) présente un premier et un deuxième module (25, 26) avec, disposée entre ceux-ci, une partie de guidage de rayon (27) pour le rayon (30) qui est dirigé sur la plate-forme de fabrication (17), et **en ce que** chaque module (25, 26) présente au moins un dispositif d'application (35) destiné à déposer du matériau constitutif et un dispositif de surveillance (38) pourvu d'au moins un élément capteur (39), le dispositif de surveillance étant disposé de manière à saisir la couche appliquée et consolidée du matériau constitutif.

2. Dispositif selon la revendication 1, **caractérisé en ce que** le premier module (25) et le deuxième module (26) ainsi que la partie de guidage de rayon (27) disposée entre ceux-ci sont alignés les uns à la suite des autres le long d'un axe et **en ce que** le dispositif d'application et le dispositif de surveillance (38) prévus au moins dans le module respectif (25, 26) sont disposés selon une symétrie en miroir par rapport à la partie de guidage de rayon (27).

3. Dispositif selon la revendication 1 ou 2, **caractérisé en ce que** dans le module respectif (25, 26), le dispositif de surveillance (38) est prévu de manière à être directement attenant à la partie de guidage de rayon (27) et que les dispositifs d'application (35) sont prévus de manière à être loin de ladite partie de guidage de rayon (27).

4. Dispositif selon l'une quelconque des revendications précédentes, **caractérisé en ce que** le dispositif d'application (35) présente un réservoir (36) pour le matériau constitutif ainsi qu'une buse d'application (37) destinée à doser et/ou à déposer de manière sélective le matériau constitutif.

5. Dispositif selon l'une quelconque des revendications précédentes, **caractérisé en ce que** le dispositif de surveillance (38) présente, de manière contiguë audit au moins un élément capteur (39), au moins un dispositif d'exposition (41).

6. Dispositif selon l'une quelconque des revendications précédentes, **caractérisé en ce que** dans le premier et le deuxième module (25, 26) est prévu, entre le dispositif d'application (35) et le dispositif de surveillance (38), respectivement un canal d'écoulement (43) d'un dispositif d'écoulement de gaz de protection (44) lequel présente des buses d'écoulement (45) qui sont respectivement dirigées sur la partie de guidage de rayon (27).

7. Dispositif selon la revendication 6, **caractérisé en ce que** les canaux d'écoulement (43) sont formés pour aspirer et délivrer du gaz de protection de telle sorte que la direction d'écoulement du gaz de protection peut être activée en fonction de la direction de déplacement du dispositif d'aide au processus (21).

8. Dispositif selon l'une quelconque des revendications précédentes, **caractérisé en ce que** chaque module (25, 26) présente, entre le dispositif d'application (35) et le dispositif de surveillance (38), en particulier entre le dispositif d'application (35) et le canal d'écoulement (43), un dispositif de nivellement (47) qui est réalisé de préférence en tant qu'élément brosse, en tant que lèvre en caoutchouc ou en tant que lame.

9. Dispositif selon l'une quelconque des revendications 4 à 8, **caractérisé en ce que** les canaux d'écoulement (43) et/ou les dispositifs de nivellement (47) et/ou les buses d'application (37) du dispositif d'application (35) sont orientés à angle droit par rapport à la direction de déplacement et s'étendent de préférence sur l'ensemble de la largeur de la plate-forme de fabrication (17).

10. Dispositif selon l'une quelconque des revendications précédentes, **caractérisé en ce que** la source de rayonnement (29) est réalisée en tant que source de rayonnement laser destinée à générer un rayon laser.

11. Procédé destiné à fabriquer des objets tridimensionnels (12) par solidification sélective de matériaux constitutifs appliqués couche par couche, lors duquel le matériau constitutif est appliqué dans au moins une chambre de processus (16), sur une plate-forme de fabrication (17), lors duquel au moins un rayon (30) est généré à l'aide d'une source de rayonnement (29) et est dirigé, à l'aide d'au moins un élément de guidage de rayon (33), sur la couche appliquée (n, n+1) du matériau constitutif, lors duquel à l'aide dudit au moins un rayon (30) dirigé sur la couche appliquée (n, n+1) du matériau constitutif, le matériau constitutif est consolidé pour former une couche (n, n+1), **caractérisé en ce que**, de manière simultanée, un dispositif d'aide au processus (21) pourvu d'un premier et d'un deuxième module (25, 26) avec, disposée entre ceux-ci, une partie de guidage de rayon (27) est déplacé le long d'une direction de déplacement dudit au moins un rayon (30) qui arrive sur le matériau constitutif et **en ce que** chaque module (25, 26) [présente] un dispositif d'application (35) destiné à déposer du matériau constitutif et un dispositif de surveillance (38) pourvu d'au moins un élément capteur (39), le dispositif de surveillance étant disposé de manière à saisir la couche appliquée et consolidée du matériau constitutif.

12. Procédé selon la revendication 11, **caractérisé en ce que** le dispositif de surveillance (38) du premier et du deuxième module (25, 26) est aligné de manière à être contigu à la partie de guidage de rayon (27) et que le dispositif d'application (35) est aligné de manière à être loin de ladite partie de guidage de rayon (27) et **en ce que** dans une première direction de déplacement du dispositif d'aide au processus (21), le dispositif d'application (35) destiné à déposer le matériau constitutif est activé dans le module (25, 26) qui précède le rayon et que la couche appliquée du matériau constitutif est saisie et surveillée à l'aide dudit au moins un élément capteur (39) du module de surveillance (38) et que dans le module (26, 25) qui suit le rayon, le dispositif d'application (30) est mis à l'arrêt et **en ce que** dans le module de surveillance (38) est saisi, à l'aide dudit au moins un élément capteur (39), un bain de fusion au niveau du point d'impact (32) du rayon (30) sur la couche, et/ou une zone consolidée, contiguë audit bain de fusion, de la couche du matériau constitutif.

13. Procédé selon la revendication 11 ou 12, **caractérisé en ce que** lorsque la direction de déplacement du dispositif d'aide au processus (21) est inversée, l'activation du premier et du deuxième module (25, 26) est inversée par une commande (23).

14. Procédé selon l'une quelconque des revendications 11 à 13, **caractérisé en ce que**, entre les canaux d'écoulement (43) du premier et du deuxième module (25, 26), une direction d'écoulement d'un gaz de protection du dispositif d'écoulement de gaz de protection (44) est activée de manière à être opposée à la direction de déplacement du dispositif d'aide au processus (21).

15. Procédé selon l'une quelconque des revendications 11 à 14, **caractérisé en ce que** la source de rayonnement (29) utilisée est une source de rayonnement laser et **en ce que** le matériau constitutif appliqué couche par couche est consolidé de manière sélective à l'aide d'un rayon laser et **en ce que** de préférence le matériau constitutif appliqué couche par couche est consolidé de manière sélective par frittage par laser ou par fusion par laser.
